# EUROPÄISCHE PATENTSCHRIFT

(11) **EP 3 556 499 B1**
(45) Veröffentlichungstag und Bekanntmachung des Hinweises auf die Patenterteilung: **14.06.2023**
(21) Anmeldenummer: 18167631.3
(22) Anmeldetag: 17.04.2018
(51) Int. Cl.: B23C 5/24

(54) **FRÄSER ZUR BEARBEITUNG VON KUNSTSTOFFMATERIALIEN**
MILLING CUTTER FOR PROCESSING PLASTIC MATERIALS
FRAISEUSE DESTINÉE À L'USINAGE DE MATÉRIAUX PLASTIQUES

(43) Veröffentlichungstag der Anmeldung: 23.10.2019
(73) Patentinhaber: Euracryl GmbH, 33428 Harsewinkel (DE)
(72) Erfinder: Tello, Gonzalo, 33428 Harsewinkel (DE)
(74) Vertreter: Pellengahr, Maximilian Rudolf

(56) Entgegenhaltungen:
- DD-A1- 280 272
- DE-A1- 19 947 946
- GB-A- 1 160 425
- US-A- 3 378 901
- US-A- 5 054 972

## Beschreibung

### Technisches Umfeld

Die Erfindung betrifft einen Fräser zur Bearbeitung von Kunststoffmaterialien, umfassend einen scheibenförmigen Grundkörper, der an einer Frässpindel festlegbar ist, wobei im Bereich der Peripherie des scheibenförmigen Grundkörpers über die Grundkörperebene hinausragende, als Schneidstifte ausgebildete Fräswerkzeuge eingelassen sind, die in Einsatzhalter verspannt sind und wobei der einzelne Einsatzhalter in einer im Grundkörper vorhandenen Aufnahmetasche fixiert ist.

### Stand der Technik

Derartige nach dem Stand der Technik bekannte Fräser eignen sich insbesondere um transparente Kunststoffe zu bearbeiten. Der Fräser besteht vornehmlich aus einem Grundkörper, der als Scheibe ausgebildet ist, wobei in dem Zentrum der Scheibe eine Öffnung vorhanden ist, in der die Frässpindel festgelegt wird um die Scheibe in Rotation zu versetzen. In dieser Scheibe, und zwar insbesondere an der Peripherie der Scheibe, sind stiftartige Fräswerkzeuge eingelassen, die mit Diamanten als Schneidmaterial besetzt sind. In dem Grundkörper sind dabei zwei, drei oder vier sich gegenüber liegende Fräswerkzeuge angeordnet, wobei einige als Vorschneider und andere als Fertigschneider ausgebildet sind. Somit können Oberflächen an einem transparenten Kunststoffblock bearbeitet werden, die gefräst und poliert ausgebildet sind. Die Fräswerkzeuge bestehend aus Halter und Schneidstift selbst sind dabei in dem Grundkörper in Taschen, die als Bohrungen ausgebildet sind, eingelassen und mittels Spannbolzen darin verspannt.

So ist aus dem Stand der Technik gemäß der DD 280 272 A1 ein Messerkopf mit Schrupp- und Schlichtschneiden bekannt, der einen Grundkörper umfasst, der an eine Frässpindel festgelegt werden kann. Hierbei sind ebenfalls in der Peripherie des Grundkörpers über die Grundkörperebene hinausragende Fräswerkzeuge eingelassen. Die Einsatzhalter selbst sind hierbei in Kreistaschen im Grundkörper eingesetzt, wobei mittels eines Positionierstiftes der Einsatzhalter und damit das Fräswerkzeug im Grundkörper ausrichtbar bzw. fixierbar ist.

Ein weiterer Fräser zur Bearbeitung ist aus der GB 11 60 425 A bekannt, wobei dieses Schneidwerkzeug ebenfalls einen Grundkörper aufweist, der im Bereich einer Peripherie eingelassene Fräswerkzeuge zeigt. Auch bei dieser Ausführungsform des Standes der Technik wird mittels eines Positionierstiftes der Einsatzhalter und damit das Fräswerkzeug in dem Grundkörper ausgerichtet und fixiert.

Als nächstliegender Stand der Technik wird auf die DE 199 47 946 verwiesen, welcher in gleicher Weise einen Fräser zur Bearbeitung von transparenten Kunststoffmaterialien offenbart. Der Fräser als solches umfasst hierbei ebenfalls einen scheibenförmigen Grundkörper, der an einer Frässpindel festgelegt werden kann, wobei im Bereich der Peripherie des scheibenförmigen Grundkörpers über die Grundkörperebene hinausragende, als Schneidstifte ausgebildete Fräswerkzeuge eingelassen sind, die in Einsatzhalter verspannt sind.

Weiterthin wird auf das US-Patent 5,054,972 verwiesen. Diese offenbart ein drehbares Werkzeug mit Dorn zur Verwendung in einer tragbaren Bohrmaschine. Das Werkzeug dient zum Schärfen der Enden von Metallstiften und insbesondere von Schneemobil-Laufflächenstiften oder - spikes. Das Werkzeug hat einen zylindrischen Kopf mit einer sich verjüngenden zentralen Öffnung, die axial mit der Drehachse des Kopfes ausgerichtet ist. Radiale Nuten erstrecken sich von der zentralen Öffnung durch die Wand des Kopfes bis zu dessen Außenfläche. Eine Wand jeder Nut bildet eine Anschlagwand, gegen die eine vorzugsweise dreieckige Schneidklinge mit einer Dicke, die wesentlich geringer ist als die Nutbreite, angesetzt wird. Die Schneidklinge wird durch eine Stellschraube, die sich von der gegenüberliegenden Wand aus gegen die Schneidklinge erstreckt, kraftschlüssig gegen die Anschlagwand gehalten, wobei eine sich entlang der Nut über das Schneidwerkzeug hinaus erstreckende Öffnung verbleibt, die ausreichend breit ist, um einen Ausgang aus der zentralen Öffnung für Späne zu schaffen, die von den Schneidkanten des Schneidwerkzeugs aus dem Ende des Zapfens geschnitten werden.

Der einzelne Einsatzhalter ist in einer im Grundkörper vorhandenen Aufnahmetasche mittels eines Positionierstiftes fixiert. Bei dieser aus dem Stand der Technik bekannten Ausführungsform sind die Positionierstifte über ihre Schaftlänge in drei Bereiche unterteilt, wobei der obere Bereich zur Positionierung des Einsatzhalters in der Kreistasche, der mittlere Bereich zur Verspannung des Einsatzhalters in dem Grundkörper und der untere Bereich zur Lagerung des Positionierstiftes in dem Grundkörper bestimmt ist. Will man also den Einsatzhalter mit dem Schneidstift wechseln, so bedarf es hier, dass mittels eines Werkzeugs der Positionierstift gelöst wird, sodass dann der Einsatzhalter aus der Aufnahmetasche herausgenommen werden kann.

Als nachteilig wird es hierbei angesehen, dass aufgrund des Positionierstiftes die Verspannung des Einsatzhalters in der Aufnahmetasche erfolgt. Hierbei bedarf es immer der Zuhilfenahme eines Werkzeugs, um entsprechend die exakte Spannkraft in der Aufnahmetasche vorzuhalten.

Die nach dem Stand der Technik bekannten Fräser weisen insbesondere den Nachteil auf, dass der als Scheibe ausgebildete Grundkörper einerseits schwer ausfällt, bedingt durch das erforderliche Trägheitsmoment, wobei andererseits auch die Festlegung des Grundkörpers an der Spindel eine aufwändige Justierarbeit erfordert. Es ist daher erforderlich, wenn beispielsweise die Fräswerkzeuge gewechselt oder nachgeschliffen werden müssen, dass dann der gesamte Grundkörper von der Spindel abgenommen werden muss. Aufgrund seines Gewichtes ergeben sich daher Transportprobleme. Ein weiteres Problem ist, dass unterschiedliche Fräswerkzeuge für die einzelnen Arbeitsgänge vorzuhalten sind, die unterschiedliche Einstellparameter haben. Hierzu muss bei jedem Werkzeugwechsel die Werkzeugachse der Maschine nachgestellt werden, was zu Stillstandzeiten in der Produktion führt.

### Aufgabe

Der Erfindung stellt sich somit das Problem vor dem aufgezeigten Stand der Technik einen bekannten Fräser derart weiterzubilden, der hinsichtlich des Werkzeugwechsels einfacher, schneller und kostengünstiger zu handhaben ist.

### Lösung

Diese Aufgabe wird erfindungsgemäß durch den Hauptanspruch gelöst, vorteilhafte Ausgestaltungen der Erfindung ergeben sich aus den Unteransprüchen.

Die mit der Erfindung erreichten Vorteile ergeben sich dadurch, dass bei der erfindungsgemäßen Lösung der Einsatzhalter in die Aufnahmetasche der Scheibe werkzeuglos eingeführt wird, wobei Ausrichtflächen in der Aufnahmetasche zur radialen Ausrichtung des Einsatzhalters vorhanden sind. Zum Einsetzen wird der Einsatzhalter in die Aufnahmetasche eingefädelt, bis dieser über dem Spannbolzen liegt. Erst in dieser Position wird dann der Einsatzhalter in die Aufnahmetasche gedrückt. Dabei drückt die Ausrichtfläche den Spannbolzen nach unten gegen eine Feder und setzt ihn unter Spannung. Die Führungsfläche verhindert, dass der Einsatzhalter sich auf dem Weg nach unten noch einmal radial verdreht. Wenn der Spannbolzen auf die Spannfläche trifft, entspannt sich der Spannbolzen, wobei er über die Spannfläche rutscht. Dabei drückt er den Einsatzhalter gegen die Wand der Aufnahmetasche und den Boden der Aufnahmetasche. Dadurch, dass die Spannfläche einen steileren Winkel hat, als die lineare Bahn des Spannbolzens, erhöht sich die Spannung auf den Einsatzhalter, wenn die Kugel des Spannbolzens über die Spannfläche rutscht.

Durch die Fliehkraft während des Rotierens der Scheibe wird die Spannkraft noch einmal erhöht. Aufgrund dieser Ausbildung wird nun erreicht, dass ein schneller Wechsel des Einsatzhalters vorgenommen werden kann, und zwar dadurch, dass durch Ausbildung des Einsatzhalters einerseits schnell die sog. Einsetzposition gefunden werden kann, wobei andererseits durch einfaches Eindrücken des Einsatzhalters in die Aufnahmetasche eine Fixierung des Einsatzhalters und somit des Schneidstiftes gegeben ist.

Um insbesondere den Einsatzhalter aus der Aufnahmetasche und wieder von der Scheibe zu entfernen, wird der Spannbolzen durch eine in der Oberseite der Scheibe befindliche Bohrung nach unten gedrückt, wobei der Einsatzhalter dann mithilfe eines Magneten herausgezogen wird. Diese Ausbildung ermöglicht nun, den eingesetzten Einsatzhalter wieder schnell aus dem scheibenförmigen Grundkörper zu entfernen, weil man durch die Bohrung mit einem Werkzeug den Spannbolzen leicht zurückdrücken kann, sodass dann die Freigabe oder Entriegelung erfolgt, um den Einsatzhalter wieder aus der Tasche herauszunehmen.

In Weiterbildung ist die Wand der Aufnahmetasche nicht ganz rund gewölbt, sondern sie ist derart ausgebildet, dass sie zwei Flächenstreifen gegenüber dem Spannbolzen aufweist. Der Spannbolzen drückt somit den Einsatzhalter gegen diese Flächen im eingesetzten Zustand. Der Rest der Taschenwand wird nicht berührt. Die beiden Flächen sind so angeordnet, dass sie zusammen mit den Spannbolzen ein Dreieck bilden, um eine stabile Dreipunktlage des Einsatzhalters in der Aufnahmetasche zu bilden. Dadurch bleibt der Einsatzhalter in allen Achsen ausgerichtet.

Gemäß der Erfindung wird merkmalsgemäß vorgeschlagen, dass der Einsatzhalter in der Aufnahmetasche unter Wirkung einer selbstspannenden Einrichtung in die Aufnahmetasche einsetzbar ist und wobei der Einsatzhalter durch die Einrichtung im eingesetzten Zustand fixiert ist. Aufgrund dieser Ausbildung wird erreicht, wie bereits beschrieben, dass ein schnell fixierter und ausgerichteter Einsatz bzw. Wechsel des Einsatzhalters in der scheibenförmigen Spindel vorgenommen werden kann.

Gemäß der Erfindung umfasst die Einrichtung einen im Grundkörper gelagerten Spannbolzen, der den Einsatzhalter in der Aufnahmetasche im eingesetzten Zustand verrastet. Der Spannbolzen ist in dem Grundkörper unter einer Schräglage angeordnet. In Weiterbildung ragt der Spannbolzen mit seinem kugelförmigen Kopf durch den Wandungsbereich der Aufnahmetasche. Diese Ausbildung gewährleistet einerseits ein einfaches und leichtes Einsetzen, wobei durch die Schräglage auch erreicht wird, dass durch die Fliehkräfte bei der Rotation sich insbesondere die Spannwirkung gegenüber dem Einsatzhalter noch verstärkt wird.

Nach einer besonders vorteilhaften Ausgestaltung der Erfindung weist der Einsatzhalter in seiner Wandung eine Führungstasche für den Kopf des Spannbolzens auf. Die Führungstasche als solches weist einsteckseitig eine angeschrägte Ausrichtfläche für den Einsatzhalter in der Aufnahmetasche auf. Die Ausrichtfläche ermöglicht es, dass bei leichtem Einsetzen des zylinderförmigen Einsatzhalters sofort die entsprechende Position gefunden wird, die für den sich anschließenden Rastvorgang wesentlich ist.

Nach einer vorteilhaften Weiterbildung schließt sich an die Ausrichtfläche eine lineare Führungsfläche und eine abgeschrägte Spannfläche für den kugelförmigen Kopf an, wobei die Spannfläche in eine Freifläche für den kugelförmigen Kopf im verspannten Zustand übergeht. Aufgrund dieser Ausbildung wird erreicht, dass insbesondere nachdem die Einfädlung des Einsatzhalters erfolgt ist, quasi eine innen liegende Kulisse für den Kugelkopf des Spannbolzens bereitgestellt wird, der über die Führungstasche hier durch die Lineare und durch die hinterschnittene Rastfläche geführt wird, sodass der Kugelkopf seine Endlage an dem Einsatzhalter leicht und einfach erreichen kann.

Nach einer besonders vorteilhaften Ausgestaltung der Erfindung weist die Wandung der Aufnahmetasche wenigstens zwei Flächenstreifen auf, die dem Spannbolzen gegenüberliegend angeordnet sind. Wie bereits schon gesagt, wird dadurch eine radiale Vorgabeausrichtung für den Einsatzhalter vorgesehen, die auf einer Dreipunkteinspannung beruht, sodass dadurch eine exakte Ausrichtung des Einsatzhalters in dem scheibenförmigen Grundkörper gegeben ist.

Um insbesondere den Einsatzhalter schnell und einfach wechseln zu können, ist - wie bereits ebenfalls beschrieben - im Grundkörper zur Entriegelung eine mit dem Spannbolzen korrespondierende Bohrung vorgesehen, die insbesondere im Bereich der Freifläche mündet, wo der Kugelkopf im verrasteten Zustand liegt. Durch ein nadelförmiges Werkzeug kann die Kugel in ihre Führung zurückgedrückt werden, sodass dann der Kugelkopf hier den Verspannungsraum freigibt, um so den Einsatzhalter aus dem scheibenförmigen Grundkörper wieder herauszuholen.

### Beschreibung der Zeichnungen

Ein Ausführungsbeispiel der Erfindung ist in den Zeichnungen rein schematisch dargestellt und wird nachfolgend näher beschrieben. Es zeigt
- Figur 1: eine perspektivische Darstellung des scheibenförmigen Grundkörpers mit explosionsartig dargestelltem Einsatzhalter und Schneidstift,
- Figur 2: eine geschnittene Ansicht des scheibenförmigen Grundkörpers im Bereich des Einsatzhalters im verspannten Zustand,
- Figur: eine weitere Darstellung in Teilansicht des scheibenförmigen Grundkörpers mit explosionsartig dargestelltem Spannbolzen und Einsatzhalter und
- Figur 4: eine geschnittene Ansicht des Einsatzhalters in Alleinstellung.

### Ausführungsbeispiele

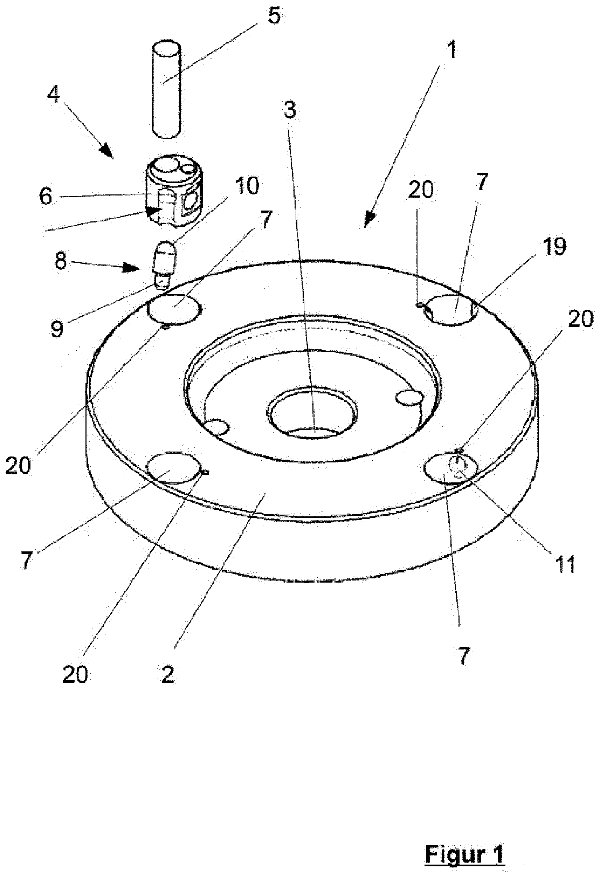

Die Figur 1 zeigt in der perspektivischen Darstellung in der teilweise explosionsartigen Darstellung einen Fräser 1, der insbesondere bestimmt ist, transparentes Kunststoffmaterial, wie beispielsweise Acrylglas, zu bearbeiten. Der Fräser 1 umfasst hierbei einen Grundkörper 2, der in dem Beispiel scheibenförmig ausgebildet ist. Der Grundkörper 2 wird hierbei an einer nicht näher dargestellten Frässpindel festgelegt, wobei im Zentrum des Grundkörpers 2 sich eine Öffnung 3 befindet, an die der Grundkörper 2 an der Spindel verspannt werden kann. Wie aus der perspektivischen Darstellung zu erkennen ist, sind im Bereich der Peripherie des scheibenförmigen Grundkörpers 2 bis zu vier Fräswerkzeuge 4 eingelassen, die über die Grundkörperebene hinausragen. Die Fräswerkzeuge 4 sind dabei als Schneidstifte 5 ausgebildet, wobei einige der Fräswerkzeuge 4 als Vorschneider und das andere als Fertigschneider ausgebildet sind, sodass zu bearbeitende Flächen nicht mehr nachpoliert werden müssen.

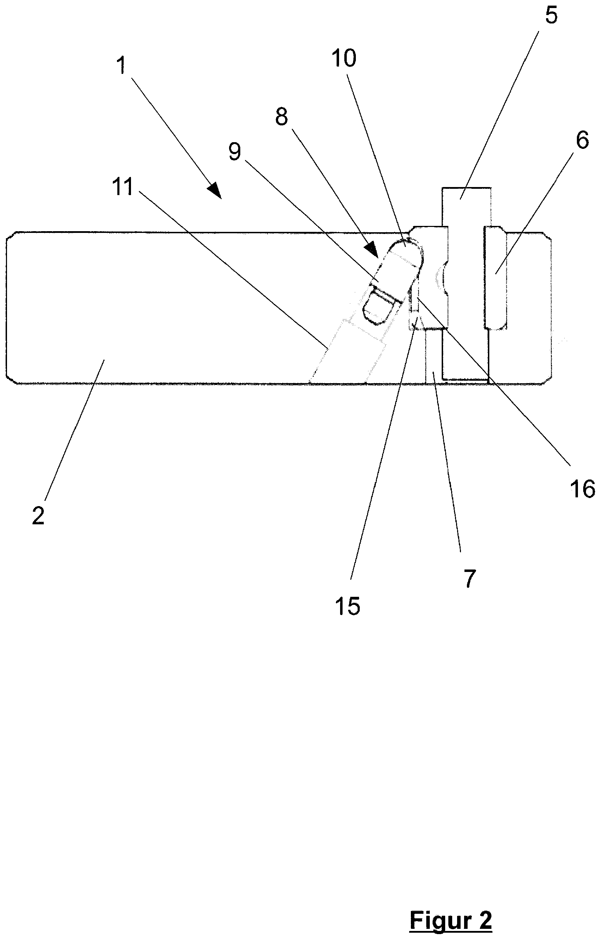

Die Schneidstifte 5 werden dabei in Einsatzhaltern 6 verspannt, wobei der einzelne Einsatzhalter 6 in einer im Grundkörper 2 vorhandenen Aufnahmetasche 7 fixiert wird. Wie insbesondere aus der perspektivischen Darstellung der Figur 1 in Verbindung mit der Figur 2 ersichtlich ist, ist der Einsatzhalter 6 in der Aufnahmetasche 7 unter Wirkung einer selbstspannenden Einrichtung 8 in die Aufnahmetasche 7 einsetzbar, wobei der Einsatzhalter 6 durch die Einrichtung 8 im eingesetzten Zustand, dargestellt in der Figur 2, fixiert ist.

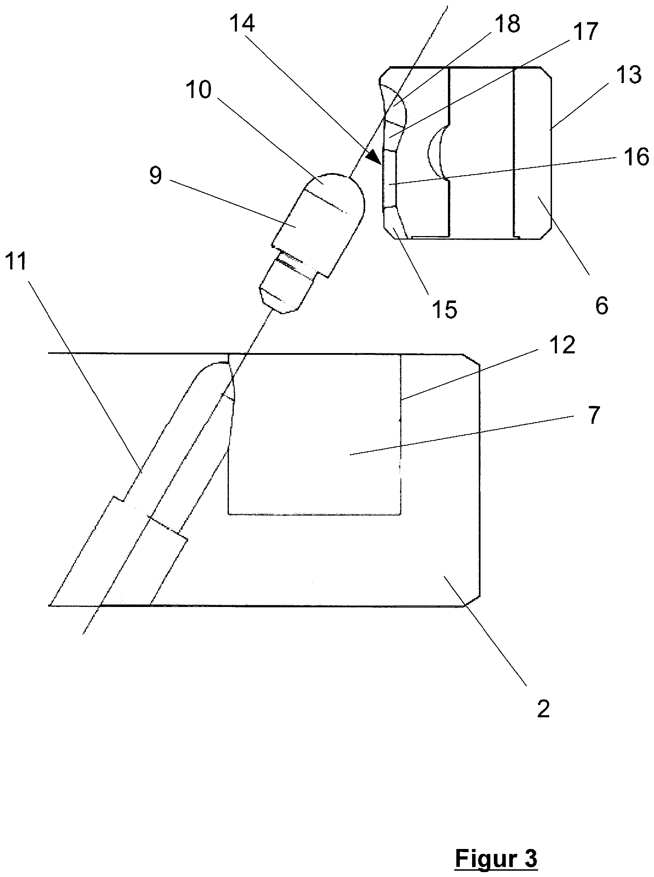

Wie aus der Zusammenschau aus der Figur 2 und 3 ersichtlich ist, umfasst die Einrichtung 8 einen im Grundkörper 2 gelagerten Spannbolzen 9, der den Einsatzhalter 6 in der Aufnahmetasche 7 im eingesetzten Zustand verrastet, wie dies in der Figur 2 dargestellt ist. Dabei ist der unter einer Federwirkung stehende Spannbolzen 9 im Grundkörper 2 unter einer Schräglage angeordnet. Der Spannbolzen 9 verfügt hierbei über einen kugelförmigen Kopf 10, der gegenüber einer nicht näher dargestellten Feder in der schräg liegenden Aufnahme 11 mit der Feder eingebunden ist. Der kugelförmige Kopf 10 ragt hierbei teilweise durch die Wand 12 der Aufnahmetasche 7, wie dies aus der Zusammenschau der Figur 2 und 3 erkennbar wird.

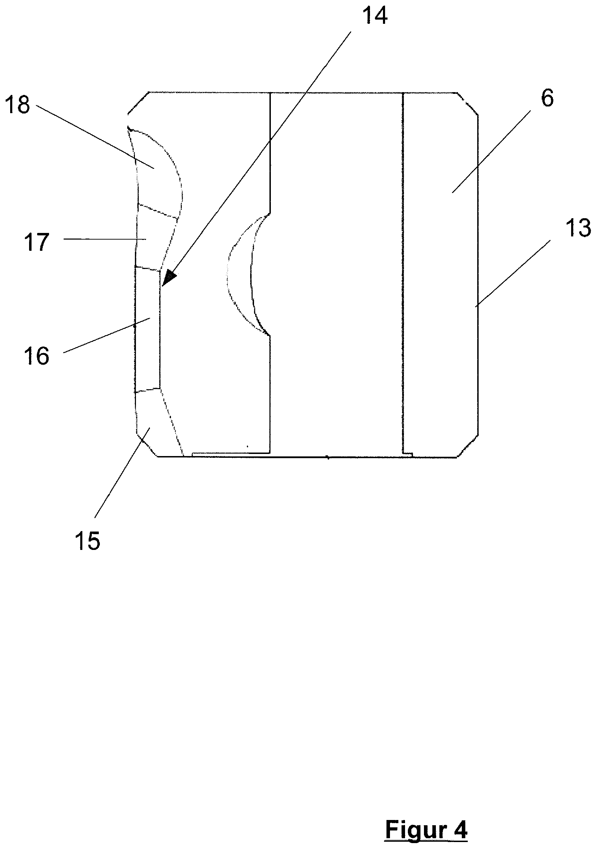

Wie insbesondere aus der Figur 3 i.V.m. der Figur 4 ersichtlich wird, weist der Einsatzhalter 6 in seiner Wand 13 eine Führungstasche 14 für den kugelförmigen Kopf 10 des Spannbolzens 9 auf. Die Führungstasche 14 in ihrer Ausgestaltung ist hierbei insbesondere in der Figur 3, aber auch in der Figur 4 näher gezeigt, wo insbesondere der Einsatzhalter 6 in der geschnittenen Ansicht dargestellt ist. Die Führungstasche 14 weist einsteckseitig eine angeschrägte Ausrichtfläche 15 auf, die insbesondere dafür bestimmt ist, dass wenn der Einsatzhalter 6 in die Aufnahmetasche 7 eingesetzt wird, zunächst der Einsatzhalter 6 im Öffnungsbereich der Aufnahmetasche 7 eingefädelt wird, wobei dann die Ausrichtfläche 15 irgendwann mit dem kugelförmigen Kopf 10 in Berührung kommt, so dass dann eine entsprechende Ausrichtung des Einsatzhalters 6 gegenüber dem Grundkörper 2 gegeben ist. Dabei schließt sich an die Ausrichtfläche 15 eine lineare Führungsfläche 16 an, die in eine abgeschrägte Spannfläche 17 für den Kopf 10 übergeht. An die Spannfläche 17 schließt sich eine Freifläche 18 für den Kopf 10 im verspannten Zustand an, wie dies insbesondere aus der Figur 2 erkennbar ist.

Es versteht sich somit, dass die leicht zurückgelegte Spannfläche 17 den Kopf 10 im verspannten Zustand hintergreift, wenn der Einsatzhalter 6 in die Aufnahmetasche 7 gedrückt wird, wobei der Kopf 10 an der Führungsfläche 16 während des Drückvorganges geführt wird.

In Weiterbildung weist die Wand 12 der Aufnahmetasche 7 wenigstens 2 Flächenstreifen 19 auf, die in der Figur 1 nur angedeutet sind, wobei diese Flächenstreifen 19 dem Spannbolzen 9 gegenüber liegend angeordnet sind. Die beiden Flächenstreichen 19 bilden somit mit dem verrasteten Spannbolzen 9 eine Dreiecksverspannung, die die axiale Ausrichtung des Einsatzhalters 6 in der Aufnahmetasche bewirken.

Wie insbesondere noch aus der Figur 1 zu erkennen ist, ist im Grundkörper 2 zur Entriegelung eine mit dem Spannbolzen 9 korrespondierende Bohrung 20 vorgesehen, durch die ein stiftartiges Werkzeug eingeführt werden kann, mit dem man dann zur Entriegelung den kugelförmigen Kopf 10 in der Aufnahme 11 zurückdrücken kann, um auf diese Weise mittels eines nicht näher dargestellten Magneten den Einsatzhalter 6 aus der Aufnahmetasche 7 herausnehmen zu können.

### Bezugszeichenliste

- 1: Fräser
- 2: Grundkörper
- 3: Öffnung
- 4: Fräswerkzeuge
- 5: Schneidstift
- 6: Einsatzhalter
- 7: Aufnahmetasche
- 8: Einrichtung
- 9: Spannbolzen
- 10: kugelförmiger Kopf
- 11: Aufnahme für Spannbolzen
- 12: Wand Aufnahmetasche
- 13: Wand Einsatzhalter
- 14: Führungstasche
- 15: angeschrägte Ausrichtfläche
- 16: lineare Führungsfläche
- 17: Spannfläche
- 18: Freifläche
- 19: Flächenstreifen
- 20: Bohrung

## Patentansprüche

1. Fräser (1) zur Bearbeitung von Kunststoffmaterialien, umfassend einen scheibenförmigen Grundkörper (2), der an einer Frässpindel festlegbar ist,
wobei im Bereich der Peripherie des scheibenförmigen Grundkörpers (2) über die Grundkörperebene hinausragende, als Schneidstifte (5) ausgebildete Fräswerkzeuge (4) eingelassen sind, die in Einsatzhaltem (6) verspannt sind, und
wobei der einzelne Einsatzhalter (6) in einer im Grundkörper (2) vorhandenen Aufnahmetasche (7) fixiert ist,
**dadurch gekennzeichnet,**
**dass** der Einsatzhalter (6) in der Aufnahmetasche (7) unter Wirkung einer selbstspannenden Einrichtung (8) in die Aufnahmetasche (7) einsetzbar ist, und
wobei der Einsatzhalter (6) durch die Einrichtung (8) im eingesetzten Zustand fixiert ist,
wobei die Einrichtung (8) einen in einer Schräglage in dem Grundkörper (2) angeordneten, unter einer Federwirkung stehenden Spannbolzen (9) umfasst, der den Einsatzhalter (6) in der Aufnahmetasche (7) im eingesetzten Zustand verrastet.

2. Fräser (1) nach den Anspruch 1,
**dadurch gekennzeichnet,**
**dass** der Spannbolzen (9) mit seinem kugelförmigen Kopf (10) durch den Wandungsbereich (12) der Aufnahmetasche (7) ragt.

3. Fräser (1) nach den Ansprüchen 1 bis 2,
**dadurch gekennzeichnet,**
**dass** der Einsatzhalter (6) in seiner Wandung (13) eine Führungstasche (14) für den Kopf (10) des Spannbolzens (9) aufweist.

4. Fräser (1) nach den Ansprüchen 1 bis 3,
**dadurch gekennzeichnet,**
**dass** die Führungstasche (14) einsteckseitig eine angeschrägte Ausrichtfläche (15) für den Einsatzhalter (6) in der Aufnahmetasche (7) aufweist.

5. Fräser (1) nach den Ansprüchen 1 bis 4,
**dadurch gekennzeichnet,**
**dass** sich an die Ausrichtfläche (15) eine lineare Führungsfläche (16) und eine abgeschrägte Spannfläche (17) für den Kopf (10) anschließt, wobei die Spannfläche (17) in eine Freifläche (18) für den Kopf (10) im verspannten Zustand übergeht.

6. Fräser (1) nach den Ansprüchen 1 bis 5,
**dadurch gekennzeichnet,**
**dass** die Wand (12) der Aufnahmetasche (7) wenigstens zwei Flächenstreifen (19) dem Spannbolzen (9) gegenüberliegend aufweist.

7. Fräser (1) nach den Ansprüchen 1 bis 6,
**dadurch gekennzeichnet,**
**dass** im Grundkörper (2) zur Entriegelung eine mit dem Spannbolzen (9) korrespondierende Bohrung (20) vorgesehen ist.

## Claims

1. A milling cutter (1) for processing plastic materials, comprising a disc-shaped base body (2) that can be fixed on a milling spindle,
wherein milling tools (4), which protrude beyond the base body plane and are realized in the form of cutting pins (5), are embedded in the region of the periphery of the disc-shaped base body (2) and clamped in insert holders (6), and
wherein the individual insert holder (6) is fixed in a receptacle pocket (7) provided in the base body (2),
**characterized in**
**that** the insert holder (6) in the receptacle pocket (7) can be inserted into the receptacle pocket (7) under the effect of a self-clamping device (8),
wherein the insert holder (6) is fixed by the device (8) in the inserted state, and
wherein the device (8) comprises a spring-loaded clamping pin (9), which is arranged in the base body (2) in an oblique position and snap-locks the insert holder (6) in the receptacle pocket (7) in the inserted state.

2. The milling cutter (1) according to claim 1,
**characterized in**
**that** the clamping pin (9) protrudes through the wall region (12) of the receptacle pocket (7) with its spherical head (10).

3. The milling cutter (1) according to claims 1 to 2,
**characterized in**
**that** the insert holder (6) has in its wall (13) a guide pocket (14) for the head (10) of the clamping pin (9).

4. The milling cutter (1) according to claims 1 to 3,
**characterized in**
**that** the guide pocket (14) has on the insertion side a beveled alignment surface (15) for the insert holder (6) in the receptacle pocket (7).

5. The milling cutter (1) according to claims 1 to 4,
**characterized in**
**that** the alignment surface (15) is followed by a linear guide surface (16) and a beveled clamping surface (17) for the head (10), wherein the clamping surface (17) transforms into a clearance surface (18) for the head (10) in the clamped state.

6. The milling cutter (1) according to claims 1 to 5,
**characterized in**
**that** the wall (12) of the receptacle pocket (7) has at least two surface strips (19) opposite the clamping pin (9).

7. The milling cutter (1) according to claims 1 to 6,
**characterized in**
**that** a bore (20) corresponding to the clamping pin (9) is provided in the base body (2) for unlocking purposes.

## Revendications

1. Fraise (1) pour l'usinage de matériaux à base de matière plastique, comprenant un corps de base en forme de disque (2), qui peut être fixé sur une broche de fraisage,
sachant que dans la zone de la périphérie du corps de base en forme de disque (2), sont introduits des outils de fraisage (4) dépassant sur le plan du corps de base, constitués sous la forme de tiges coupantes (5), qui sont serrés dans des supports insérables (6), et
sachant que le support insérable (6) individuel est fixé dans une alvéole de logement (7) existant dans le corps de base (2),
**caractérisée en ce que**
le support insérable (6) dans l'alvéole de logement (7) peut être inséré dans l'alvéole de logement (7) sous l'action d'un dispositif auto-serrant (8), et
sachant que le support insérable (6) est fixé par le dispositif (8) à l'état inséré,
sachant que le dispositif (8) comprend un boulon de serrage (9) disposé dans une position inclinée dans le corps de base (2), se trouvant sous l'effet d'un ressort, qui enclenche à l'état inséré, le support insérable (6) dans l'alvéole de logement (7).

2. Fraise (1) selon la revendication 1,
**caractérisée en ce que**
le boulon de serrage (9) dépasse avec sa tête sphérique (10) à travers la zone de paroi (12) de l'alvéole de logement (7).

3. Fraise (1) selon les revendications 1 à 2,
**caractérisée en ce que**
le support insérable (6) comporte dans sa paroi (13) une alvéole de guidage (14) pour la tête (10) du boulon de serrage (9).

4. Fraise (1) selon les revendications 1 à 3,
**caractérisée en ce que**
l'alvéole de guidage (14) comporte du côté introduction une surface d'orientation (15) chanfreinée pour le support insérable (6) dans l'alvéole de logement (7).

5. Fraise (1) selon les revendications 1 à 4,
**caractérisée en ce qu'**
une surface de guidage linéaire (16) et une surface de serrage chanfreinée (17) pour la tête (10) se raccordent à la surface d'orientation (15), sachant que la surface de serrage (17) passe à l'état serré dans une surface libre (18) pour la tête (10).

6. Fraise (1) selon les revendications 1 à 5,
**caractérisée en ce que**
la paroi (12) de l'alvéole de logement (7) comporte au moins deux bandes de surface (19) opposées au boulon de serrage (9).

7. Fraise (1) selon les revendications 1 à 6,
**caractérisée en ce qu'**
un trou (20) correspondant au boulon de serrage (9) est prévu dans le corps de base (2) pour le déverrouillage.
